# EUROPÄISCHE PATENTSCHRIFT

(11) **EP 0 614 827 B1**
(45) Veröffentlichungstag und Bekanntmachung des Hinweises auf die Patenterteilung: **28.10.1998**
(21) Anmeldenummer: 94103782.2
(22) Anmeldetag: 11.03.1994
(51) Int. Cl.: B65D 85/68, B62J 19/00

(54) **Fahrradverpackung**
Package for a bicycle
Emballage pour une bicyclette

(30) Priorität: 12.03.1993 DE 9303453 U
(43) Veröffentlichungstag der Anmeldung: 14.09.1994
(73) Patentinhaber: Pertramer, Siegfried, D-85221 Dachau (DE)
(72) Erfinder: Pertramer, Siegfried, D-85221 Dachau (DE)
(74) Vertreter: Brose, D. Karl, Dipl.-Ing.

(56) Entgegenhaltungen:
- EP-A- 0 381 917
- DE-C- 950 059
- DE-U- 9 205 478
- DE-U- 9 212 816
- DE-U- 9 215 435
- US-A- 4 756 416
- US-A- 5 193 724

## Beschreibung

Die vorliegende Erfindung betrifft eine Fahrradverpackung.

Üblicherweise wurden Fahrräder bisher in quaderförmigen Kartonverpackungen verpackt. Dabei werden üblicherweise abstehende Teile, wie die Pedale, demontiert, und der Lenker um 90° gedreht, damit das Fahrrad entsprechend schmal ist.

Nachdem seit 01.01.1992 eine gesetzliche Rücknahmepflicht für Transportverpackungen besteht, betrifft diese Rücknahmepflicht auch die herkömmlichen Fahrradverpackungen.

Die herkömmlichen Karton-Fahrradverpackungen sind aber beim Rücktransport genauso voluminös, wie im mit einem Fahrrad gefüllten Zustand.

Darüber hinaus hat es sich gezeigt, daß die Kartonverpakkungen für Fahrräder an einigen Stellen, an denen die Fahrräder hervorstehende Teile aufweisen (Naben, Bremsen, Sattel) leicht durchstoßen werden. Diese Kartonverpackungen sind daher auch kaum wiederzuverwerten. Sie müssen nach einmaliger Verwendung als Altpapier entsorgt werden. Daneben gibt es flexible Schutzhüllen für Fahrräder (s.h. z.B. DE-U-9212816) die sich zusammenlegen und mehrfach genutzt werden können.

Es ist Aufgabe der vorliegenden Erfindung, eine Fahrradverpackung zu schaffen, die vielfach genutzt werden kann, und die im leeren Zustand mit einem sehr kleinen Volumen zurücktransportiert werden kann.

Erfindungsgemäß wird diese Aufgabe durch eine Fahrradverpackung gemäß Anspruch 1 gelöst.

Vorzugsweise sind die Platten dabei im wesentlichen gleich groß und weisen eine rechteckige Form auf. Dadurch wird das Zusammenlegen der leeren Verpackung zum Rücktransport wesentlich erleichtert.

Besonders bevorzugt ist es, Spanngurte vorzusehen, durch die die Hülle hinten und vorne um die Räder des verpackten Fahrrades gespannt werden kann. Dadurch wird eine feste Fixierung zwischen Fahrrad und Verpackung erzielt.

Es ist weiter besonders bevorzugt, weitere Spanngurte vorzusehen, die sich oben über das verpackte Fahrrad erstrecken. Dadurch kann die Größe der Fahrradverpackung flexibel an verschiedenste Fahrradgrößen angepaßt werden, ohne daß für die verschieden großen Fahrräder verschiedene Verpackungen vorgehalten werden müssen.

Weiter ist es besonders bevorzugt, daß die Hülle eine dreiecksförmige Verlängerung nach oben aufweist, an der einer der weiteren Spanngurte befestigt ist. Durch diese Ausführungsform kann die Verpackung nicht nur für den Transport des Fahrrades (dann ist die dreiecksförmige Verlängerung seitlich umgeklappt und durch den einen weiteren Spanngurt an der Seite befestigt), sondern auch vom Endverbraucher als Persenning für sein Fahrrad benutzt werden. Die dreiecksförmige Verlängerung erlaubt es nämlich, die Verpackung auch dann zu verwenden, wenn der Lenker sich nicht in Transportstellung, sondern in Fahrstellung befindet. Die dreiecksförmige Verlängerung nimmt dann die seitlich herausstehenden Enden des Lenkers mit auf. Es besteht damit die Möglichkeit, daß die Verpackung vom Endverbraucher als sinnvolles Zubehör mit übernommen oder sogar speziell gekauft wird. Ein Rücktransport und eine Entsorgung der Verpackung erübrigen sich dann völlig. In dieser Verpackung kann das Fahrrad dann im Freien aufbewahrt oder auch wesentlich besser geschützt auf Fahrraddachträgern auf einem Kraftfahrzeug transportiert werden.

Bei einer weiteren besonders bevorzugten Ausführungsform dieser Verpackung ist die Hülle ebenfalls mit einer dreiecksförmigen Verlängerung nach oben versehen, die jedoch auf beiden Seiten außen mit jeweils zueinander passenden Druckknöpfen versehen ist, durch die der obere Teil dieser Verlängerung in einer nach innen geklappten Stellung fixierbar ist. Auf diese Weise "verschwindet" die dreiecksförmige Verlängerung der Verpackung nach innen, solange die Verpackung ein Fahrrad im Transportzustand (mit längs gestelltem Lenker) umfaßt.

Weiter ist es bevorzugt, an der Vorderseite der Hülle einen T-förmigen Reißverschluß anzubringen, wobei der senkrechte Balken des T die Vorderseite der Hülle senkrecht öffnet und bis zum unteren Ende der Hülle durchläuft. Durch diese Konstruktion wird es für den Endverbraucher noch leichter, sein Fahrrad immer wieder mit der Fahrradverpackung als Persenning zu versehen. Wenn nämlich der Lenker in Fahrstellung befindlich ist, ist es nicht so leicht, die Fahrradverpackung wieder über das Fahrrad zu ziehen. Dies wird durch den T-förmigen Reißverschluß wesentlich erleichtert.

Vorzugsweise wird in der Hülle ein Sichtfenster aus durchsichtigem flexiblem Material vorgesehen. Dadurch kann auch beim verpackten Fahrrad leicht festgestellt werden, welcher Typ bzw. welche Farbe sich unter der jeweiligen Verpackung verbirgt, ohne daß außen entsprechende Kennzeichnungen angebracht werden müssen.

Es ist weiter bevorzugt, außen an der Hülle eine verschließbare Klarsichttasche dergestalt anzubringen, daß sie im zusammengelegten Zustand der Verpackung ebenso sichtbar ist, wie wenn die Verpackung ein Fahrrad umschließt. In dieser Klarsichttasche können Adressen bzw. Lieferscheine untergebracht werden, wobei diese sowohl im zusammengefalteten Zustand der Verpackung lesbar sind als auch wenn die Verpackung ein Fahrrad umschließt.

Es ist weiter besonders bevorzugt, die gesamte Fahrradverpackung vollständig aus Polyamid herzustellen. Dadurch wird erreicht, daß die Verpackung problemlos wiederverwertbar ist, wenn sie wirklich einmal nach etlichen Transportvorgängen nicht mehr brauchbar ist. Die ganze Verpackung ist dann sortenrein und kann problemlos geschreddert und wieder eingeschmolzen werden. Es entsteht dann wieder der entsprechende Rohstoff.

Weiter ist es besonders bevorzugt, daß einer der Spanngurte gleichzeitig dazu geeignet ist, die Fahrradverpackung im zusammengelegten Zustand zusammenzuhalten. Auf diese Weise bildet die zusammengelegte Verpackung ein festes Päckchen, welches leicht gehandhabt werden kann, und welches beim Rücktransport nicht versehentlich aufgehen kann. In dieser Form kann die Verpackung sogar mit der normalen Post zurückgesandt werden.

Weiter ist es besonders bevorzugt, auf der Hülle fortlaufende arabische Zahlen dergestalt anzubringen, daß durch diese Zahlen die korrekte Reihenfolge des Zusammenlegens der Hülle angegeben wird. Auf diese Weise wird das Zusammenlegen der Hülle auch für völlig ungeübtes Personal oder den Endverbraucher problemlos möglich. Eine besondere Anleitung zum Zusammenlegen der Verpackung ist dann nicht erforderlich.

Im folgenden soll ein Ausführungsbeispiel der Erfindung anhand der beigefügten Zeichnungen erläutert werden. Es zeigen:
**FIGUR 1** eine erfindungsgemäße Fahrradverpackung, die ein Fahrrad umschließt, von der Seite;
**FIGUR 2** die Verpackung gemäß Figur 1 mit Fahrrad von der Rückseite;
**FIGUREN 3 bis 9** die einzelnen Schritte des Zusammenlegens der leeren Verpackung gemäß Figuren 1 und 2.

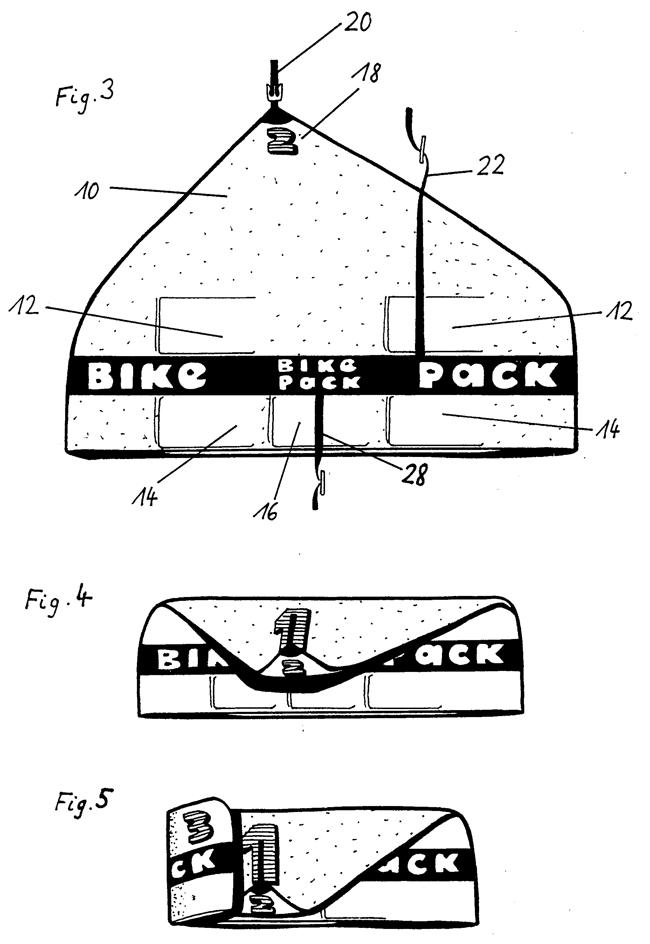

Die erfindungsgemäße Fahrradverpackung besteht aus einer im wesentlichen glockenförmigen, unten vollständig offenen Hülle, die aus zwei näherungsweise dreiecksförmigen Polyamidgewebestücken zusammengenäht ist. Dieser Aufbau ist besonders gut in Figur 3 zu erkennen. An denjenigen Bereichen der Hülle 10, an denen diese Hülle mit besonders hervorstehenden Teilen des Fahrrads in Berührung kommen kann (auf Höhe der Felgenbremsen des Fahrrades, auf der Höhe der Naben des Fahrrades und im Bereich der Tretkurbeln des Fahrrades) sind an der Innenseite der Hülle massive Polyamidplatten befestigt. Die Befestigung kann durch Einnähen in weitere, aus Polyamidgewebe gebildete Taschen erreicht werden. Die Platten können aber auch durch thermisches oder Ultraschall-Schweißen oder durch Kleben an den entsprechenden Stellen befestigt werden. In dem hier beschriebenen Ausführungsbeispiel sind jeweils zwei Platten 12 in Höhe der vorderen und hinteren Felgenbremsen, jeweils zwei weitere Platten 14 in Höhe der vorderen und hinteren Naben sowie jeweils eine weitere Platte 16 in Höhe der Tretkurbeln des Fahrrads angebracht.

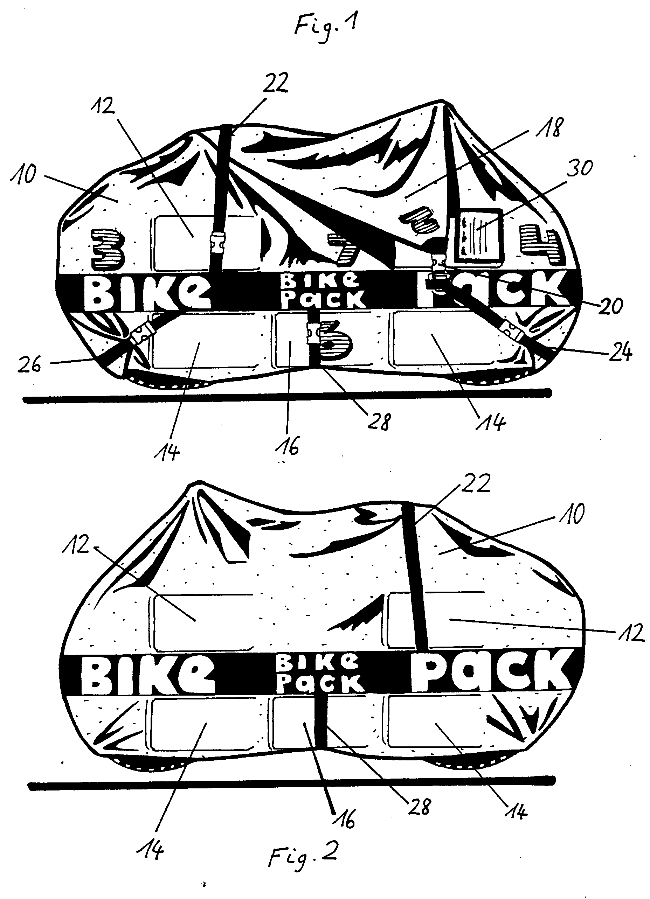

Die Hülle 10 weist oben eine dreiecksförmige Verlängerung 18 auf. Diese ist besonders gut in Figur 1 zu erkennen. Dort ist sie nach vorne geklappt und mit einem entsprechenden Spanngurt 20 an der Außenseite der Hülle befestigt, da in der Figur 1 die Verpackung in dem Zustand dargestellt ist, in dem sie ein Fahrrad in Transportstellung (mit parallel zur Fahrtrichtung stehendem Lenker) umschließt.

Wenn die Verpackung ein Fahrrad in Fahrstellung (mit dem Lenker senkrecht zur Fahrtrichtung) umschließen soll, stellt die dreiecksförmige Verlängerung 18 den Raum für die dann seitlich abstehenden Enden des Lenkers des verpackten Fahrrades zur Verfügung. Der Spanngurt 20 wird dann nicht geschlossen.

Es ist dann noch ein weiterer Spanngurt 22 vorgesehen, der kurz vor dem Sattel oben um das Fahrrad herum verläuft.

Weitere Spanngurte 24, 26 verbinden jeweils die vordere untere und die hintere untere Ecke der glockenförmigen Hülle 10 mit Punkten auf der Vorderseite dieser Hülle 10 etwa in Höhe der Radnaben jeweils des Vorder- bzw. Hinterrades. Ein weiterer Spanngurt 28 läuft auf der Höhe der Pedale unten um das verpackte Fahrrad herum, und verbindet in geschlossenem Zustand die beiden unten offenen Hälften der Hülle 10.

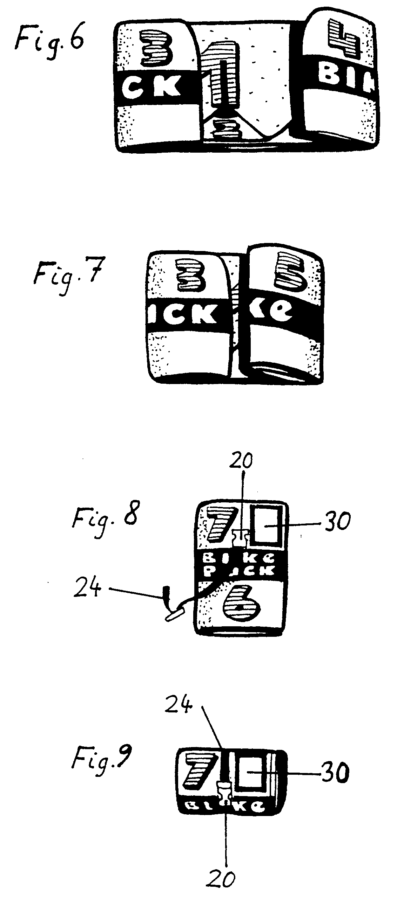

Die ganzen Spanngurte 20, 22, 24, 26 und 28 bestehen jeweils aus starken Polyamidbändern als freie Enden, die an ihrem Ende jeweils mit zusammenpassenden Schnappverschlußvorrichtungen bekannter Art versehen sind. Diese Schnappverschlußvorrichtungen können ebenfalls vollständig aus Polyamid hergestellt werden. Sie sind längenverstellbar an den Gurtenden befestigt, so daß sich die Länge der Spanngurte verändern läßt. Durch Veränderung der Länge der Spanngurte 24, 26 und 28 kann die Fahrradverpackung an verschiedene Fahrradgrößen angepaßt werden. Im vollständig zusammengelegten Zustand der Verpackung (sh. Figuren 8 und 9) wird das vorderseitige Ende des Spanngurts 24 mit dem vorderseitigen Ende des Spanngurts 20 verbunden, so daß die zum Rücktransport zusammengelegte Verpackung fest von einem Spanngurt umschlossen ist.

In der Nähe des gemeinsamen Angriffspunktes der beiden Spanngurte 20 und 24 ist noch eine Klarsichttasche 30 auf die Hülle 10 aufgenäht. Durch geschickte Anordnung dieser Klarsichttasche 30 ist diese sowohl in dem Zustand, in dem ein Fahrrad von der Verpackung umschlossen wird (sh. Figur 1) als auch in dem vollständig zusammengelegten Zustand (Figur 9) gut sichtbar. Vorzugsweise ist die Klarsichttasche 30 mit einem Druckknopf verschließbar.

Auf der äußeren Oberfläche der Hülle 10 sind entsprechende Zahlen 1 bis 7 dergestalt angebracht, daß diese Zahlen die Reihenfolge des Zusammenlegens der Hülle angeben. Das Zusammenlegen der erfindungsgemäßen Fahrradverpackung soll im folgenden anhand der Figuren 3 bis 9 beschrieben werden.

Zuerst wird die leere Hülle mit der Vorderseite nach unten auf den Boden gelegt (sh. Figur 3). Die dreiecksförmige Verlängerung 18 wird umgeklappt. Die Ziffer 1 wird sichtbar. Nun wird die oberste Spitze der dreiecksförmigen Verlängerung 18 erneut umgeklappt. Die Ziffer 2 wird sichtbar (sh. Figur 4).

Nun wird die linke Seite der Hülle umgeklappt. Die entsprechenden Bruchlinien ergeben sich dabei zwangsläufig durch die Anordnung der Platten 12 bis 16. Die Zahl 3 wird sichtbar (sh. Figur 5).

Nun wird die rechte Seite einmal umgelegt. Ziffer 4 wird sichtbar (sh. Figur 6).

Die rechte Seite wird nun nochmals umgeklappt, Ziffer 5 wird sichtbar (sh. Figur 7).

Die verbleibende Verpackung wird in der Mitte zusammengeklappt, Ziffern 6 und 7 werden sichtbar (sh. Figur 8).

Nun wird diese Verpackung nochmals in der Mitte gefaltet, so daß nur mehr die Ziffer 7 sichtbar ist. Das verbleibende kleine und handliche Paket, bei dem immer noch die Klarsichttasche 30 nach außen zeigt, kann nun mittels der beiden Enden der Spanngurte 24 und 20 verschlossen werden (sh. Figur 9). Die erfindungsgemäße Fahrradverpackung ist somit auf kleinsten Raum zusammengelegt. Sie bildet ein leicht handhabbares Paket, welches problemlos transportiert und beispielsweise auch mit der Post versandt werden kann.

## Patentansprüche

1. Fahrradverpackung aus einer Hülle (10) aus flexiblem Material, in der Platten (12, 14, 16) aus relativ unflexiblem Material befestigt sind, **dadurch gekennzeichnet**, daß jeweils zwei Platten (12) in Höhe der vorderen und hinteren Felgenbremsen, jeweils zwei weitere Platten (14) in Höhe der vorderen und hinteren Naben sowie jeweils eine weitere Platte (16) in Höhe der Tretkurbeln des Fahrrades angebracht sind, daß die leere Hülle (10) zu einem Päckchen (Fig. 9) zusammengelegt werden kann, welches im wesentlichen die gleichen Abmessungen aufweist, wie eine der Platten (12, 14, 16).

2. Fahrradverpackung nach Anspruch 1, dadurch gekennzeichnet, daß die Platten (12, 14, 16) im wesentlichen gleich groß sind und rechteckige Form aufweisen.

3. Fahrradverpackung nach Anspruch 1, 2, dadurch gekennzeichnet, daß Spanngurte (24, 26) vorgesehen sind, durch die die Hülle (10) hinten und vorne um die Räder des verpackten Fahrrades gespannt werden kann.

4. Fahrradverpackung nach Anspruch 3, dadurch gekennzeichnet, daß weitere Spanngurte (20, 22) vorgesehen sind, die sich oben über das verpackte Fahrrad erstrecken.

5. Fahrradverpackung nach Anspruch 4, dadurch gekennzeichnet, daß die Hülle (10) eine dreiecksförmige Verlängerung (18) nach oben aufweist, an der einer der weiteren Spanngurte (20) befestigt ist.

6. Fahrradverpackung nach Anspruch 4, dadurch gekennzeichnet, daß die Hülle (10) eine dreiecksförmige Verlängerung (18) nach oben aufweist, die auf beiden Seiten außen mit jeweils zueinander passenden Druckknöpfen versehen ist, durch die der obere Teil dieser Verlängerung (18) in einer nach innen geklappten Stellung fixierbar ist.

7. Fahrradverpackung nach Anspruch 5 oder 6, dadurch gekennzeichnet, daß an der Vorderseite der Hülle (10) ein T-förmiger Reißverschluß angebracht ist, wobei der senkrechte Balken des T die Vorderseite der Hülle (10) senkrecht öffnet und bis zum unteren Ende der Hülle durchläuft.

8. Fahrradverpackung nach einem der vorhergehenden Ansprüche, dadurch gekennzeichnet, daß in der Hülle (10) ein Sichtfenster aus durchsichtigem flexiblem Material vorgesehen ist.

9. Fahrradverpackung nach einem der vorhergehenden Ansprüche, dadurch gekennzeichnet, daß außen an der Hülle (10) eine verschließbare Klarsichttasche (30) dergestalt angebracht ist, daß sie im zusammengelegten Zustand der Verpackung ebenso sichtbar ist, wie wenn die Verpackung ein Fahrrad umschließt.

10. Fahrradverpackung nach einem der vorhergehenden Ansprüche, dadurch gekennzeichnet, daß die gesamte Fahrradverpackung vollständig aus Polyamid hergestellt ist.

11. Fahrradverpackung nach Anspruch 3 oder Anspruch 3 und einem der folgenden Ansprüche, dadurch gekennzeichnet, daß einer der Spanngurte (24) gleichzeitig dazu geeignet ist, die Fahrradverpackung im zusammengelegten Zustand zusammenzuhalten.

12. Fahrradverpackung nach einem der vorhergehenden Ansprüche, dadurch gekennzeichnet, daß auf der Hülle (10) fortlaufende arabische Zahlen angebracht sind, die die korrekte Reihenfolge des Zusammenlegens der Hülle (10) angeben.

## Claims

1. Bicycle packing consisting of an envelope (10) of flexible material within which plates (12, 14, 16) of an relatively unflexible material are fixed, characterized in that each two plates (12) are fixed in the area of the forward and rearward cantilever brakes, each two further plates (14) are fixed in the area of the forward and rearward hubs and each one further plate (16) is fixed in the area of the tread cranks of the bicycle and, in that the empty envelope can be folded into a small package (Fig. 9) which basically has the same dimensions as one of the plates (12, 14, 16).

2. Bicycle packing according to claim 1, characterized in that the plates (12, 14, 16) basically are of the same size and having an rectangular shape.

3. Bicycle packing according to claim 1 or 2, characterized in that there are provided tensioning belts (24, 26) by the means of which the envelope (10) can be tensioned around the wheels of the packed bicycle on the front end and rear end thereof.

4. Bicycle packing according to claim 3, characterized in that there are provided further tensioning belts (20, 22) extending on the top side over the packed bicycle.

5. Bicycle packing according to claim 4, characterized in that the envelope is having a triangular upward extension (18) onto which one of the further tensioning belts (20) is fixed.

6. Bicycle packing according to claim 4, characterized in that the envelope is having a triangular extension (18) on the top thereof which on both sides on the exterior is provided with matching snap closures by the means of which the top part of this extension (18) can be fixed in an inwardly folded position.

7. Bicycle packing according to claim 5 or 6, characterized in that on the front side of the envelope (10) there is provided a T-shaped zipper, wherein the perpendicular limb of the T is opening the front side of the envelope in a perpendicular direction and is extending to the bottom end of the envelope.

8. Bicycle packing according to any of the preceding claims, characterized in that in the envelope (10) there is provided a window consisting of a transparent flexible material.

9. Bicycle packing according to any of the preceding claims, characterized in that on the exterior of the envelope (10) there is provided a clear view pocket (30) which can be closed in such a way that the pocket (30) can be viewed in the folded position of the packing as well as when the packing is enclosing a bicycle.

10. Bicycle packing according to any of the preceding claims, characterized in that the entire bicycle packing is produced completely from polyamid.

11. Bicycle packing according to claim 3 or claim 3 and any of the following claims, characterized in that one of the tensioning belts (24) simultaneously is suitable to maintain the bicycle packing in the folded state.

12. Bicycle packing according to any of the preceding claims, characterized in that on the envelope (10) there are provided consecutive arabic numbers which are indicating the correct order of the folding of the envelope (10).

## Revendications

1. Emballage pour bicyclette, constitué d'une enveloppe (10) réalisée en un matériau flexible, dans laquelle des plaques (12, 14, 16) en matériau relativement inflexible sont fixées, caractérisé en ce que chaque fois deux plaques (12) à hauteur des freins sur jantes avant et arrière, chaque fois deux autres plaques (14) à hauteur des moyeux avant et arrière, ainsi que chaque fois une autre plaque (16) au niveau du pédalier de la bicyclette, sont montées, en ce que l'enveloppe (10) vide peut être regroupée en un petit paquet (figure 9), qui présente essentiellement les mêmes dimensions que celles de l'une des plaques (12, 14, 16).

2. Emballage pour bicyclette selon la revendication 1, caractérisé en ce que les plaques (12, 14, 16) sont de dimensions sensiblement égales et ont une forme rectangulaire.

3. Emballage pour bicyclette selon la revendication 1, caractérisé en ce que sont prévues des courroies de tension (24, 26) au moyen desquelles l'enveloppe (14) peut être tendue à l'arrière et à l'avant autour des roues de la bicyclette emballée.

4. Emballage pour bicyclette selon la revendication 3, caractérisé en ce que d'autres courroies de tension (20, 22) sont prévues qui s'étendent au-dessus de la bicyclette emballée.

5. Emballage pour bicyclette selon la revendication 4, caractérisé en ce que la enveloppe (10) présente un prolongement (18) triangulaire vers le haut, auquel sont fixées les autres courroies de tension (20).

6. Emballage pour bicyclette selon la revendication 4, caractérisé en ce que l'enveloppe (10) présente un prolongement (18) triangulaire orienté vers le haut, qui est pourvu sur chacun des deux côtés extérieurement de boutons pression s'adaptant les uns dans les autres et au moyen desquels la partie supérieure de ce prolongement (18) peut être fixée en une position rabattue vers l'intérieur.

7. Emballage pour bicyclette selon la revendication 5 ou la revendication 6, caractérisé en ce que sur la face avant de l'enveloppe (10) est montée une fermeture à glissière en forme de T, la barre perpendiculaire du T ouvre la face avant de l'enveloppe (10), perpendiculairement, et s'étendant jusqu'à l'extrémité inférieure de l'enveloppe.

8. Emballage pour bicyclette selon l'une des revendications précédentes, caractérisé en ce qu'une fenêtre d'observation, constituée d'un matériau flexible translucide, est prévue dans l'enveloppe (19).

9. Emballage pour bicyclette selon l'une des revendications précédentes, caractérisé en ce que, extérieurement à l'enveloppe (10), est montée une poche transparente (30) pouvant être fermée, de manière à ce qu'à l'état regroupé de l'emballage, on puisse également voir si l'emballage entoure une bicyclette.

10. Emballage pour bicyclette selon l'une des revendications précédentes, caractérisé en ce que l'ensemble de l'emballage pour bicyclette est complètement fabriqué en polyamide.

11. Emballage pour bicyclette selon la revendication 3 ou la revendication 3 et l'une des revendications précédentes, caractérisé en ce que l'une des courroies de tension (24) convient simultanément pour maintenir à l'état assemblé l'emballage pour bicyclette (12).

12. Emballage pour bicyclette selon l'une des revendications précédentes, caractérisé en ce que sur l'enveloppe (10) sont placés des chiffres arabes se suivant, qui indiquent l'ordre de succession correct de repliage de l'enveloppe (10).
